# EUROPEAN PATENT APPLICATION

(11) **EP 4 629 062 A1**
(43) Date of publication of application: **08.10.2025**
(21) Application number: 24167996.8
(22) Date of filing: 02.04.2024
(51) Int. Cl.: G06F 8/65, G06F 9/455, G06F 11/36

(54) **VEHICLE, APPARATUS, COMPUTER PROGRAM, COMPUTER-READABLE DATA CARRIER, AND METHOD FOR UPDATING SOFTWARE OF A MOBILE DEVICE**

(71) Applicant: AUMOVIO Autonomous Mobility Germany GmbH, 85057 Ingolstadt (DE)
(72) Inventor: Padiri, Bhanu Prakash, 560100 Bangalore (IN); Muralidhara, Chethan, 560100 Bangalore (IN)
(74) Representative: Aumovio Corporation

(57) **Abstract**

Embodiments of the present disclosure relate to a vehicle, apparatus, computer program, a computer-readable data carrier, and method for updating software of a mobile device. The method comprises multiple steps by the mobile device including receiving an update file, updating, based on the update file, a software running on a virtual model of hardware of the mobile device, and checking a behavior of the updated software on the virtual model. Further, the method comprises updating, by the vehicle, based on the update file, software of the hardware of the mobile device based on the behavior of the updated software on the virtual model.

## Description

Embodiments of the present disclosure relate to a vehicle, apparatus, computer program, a computer-readable data carrier, and method for updating software of a mobile device. In particular, the concept proposed herein relates to a security mechanism for software updates of vehicles.

Software updates are crucial in many fields of technology, e.g., for enhancing security by patching vulnerabilities that could be exploited by malicious entities. They also introduce new features and improvements, enhancing user experience and functionality. Regular updates ensure compatibility with evolving hardware and other software, preventing issues related to outdated technology. Additionally, updates often include bug fixes, addressing performance issues and ensuring the smooth operation of the software. Ultimately, staying current with software updates is essential for maintaining a secure, efficient, and up-to-date computing environment.

With digitalization, software updates become increasingly important also in automotive applications, e.g., for updating software of an electronic control unit (ECU) of/for a vehicle.

However, software updates may be prone to cyber attacks. Therefore, security measures may be taken to avoid cyber attacks on software updates. Such security measures may involve the use of hash functions, block chain technology, measures against reverse engineering or distribution of navigation map updates in vehicle networks, and/or end-to-end encryption (e.g., Secure Sockets Layer, SSL).

Some approaches make use of exploitation techniques using several attack vectors, e.g., On-Board Diagnostics version II (OBD-II) port, WiFi, Bluetooth and showed that in-vehicle ECUs can be compromised for remote cyberattacks.

However, even more secure defense mechanisms may be desired in some applications.

In particular, security mechanisms addressing challenges of software updates in automotive applications may be desired. Automotive applications may include a particularly complex architecture with an increasing number of ECUs. Updating the different types of ECU itself becomes challenging. Apart from that, the following challenges exist:
- The security of the data over the air is at high risk.
- The rollback mechanism of the software update
- Higher downtime is not accepted while updating the software or firmware.
- The size of the software blocks is problematic
- How seamlessly OTA (over the air) updates happen with impacting the current system.

OTA updates in automotive applications entail major challenges in terms of security while updating the software over the air. If the attackers get control of a vehicle, one might end up in a hazard situation.

Hence, there may be a demand for an improved concept for software updates for mobile devices.

This demand may be satisfied by the subject-matter of the present disclosure. In particular, the proposed approach addresses the challenges/problems mentioned herein.

Embodiments of the present disclosure provide a method for updating software of a mobile device. The method comprises multiple steps by the mobile device including receiving an update file, updating, based on the update file, a software running on a virtual model of hardware of the mobile device, and checking a behavior of the updated software. Further, the method comprises updating, by the vehicle, based on the update file, software of the hardware of the mobile device based on the behavior of the updated software on the virtual model.

As a skilled person will appreciate, the virtual model may be configured such that it does not significantly impact the operation of the hardware. In automotive applications, e.g., the virtual model may not have an impact on the driving behavior and/or the operation of the infotainment system. Thus, the method allows to extensively check the software update for any malicious or erroneous content before applying it to the hardware. In doing so, malicious or erroneous content may be recognized before it may be applied to the hardware where it may lead to an undesired behavior of the mobile device, e.g., of a vehicle. So, the proposed method may lead to a higher security in software updates of mobile devices.

In practice, checking the behavior of the updated software may comprise applying a simulation to the updated software on the virtual model and checking the behavior of the updated software on the virtual model for the simulation.

In doing so, the simulation may include a virtual emulation of an operation of the hardware. In automotive applications, the simulation, e.g., simulates how the hardware is operated to control the vehicle, e.g., maneuver the vehicle and/or control the infotainment system.

The skilled person having benefit from the present disclosure, will particularly appreciate that the proposed approach may be applied in applications for perceiving and/or processing the environment of the mobile device. In automotive applications, it may be, e.g., applied for an autonomous or assisted driving system processing sensor data of a traffic environment.

For such applications, the simulation may comprise a simulation of an environment of the mobile device.

The software update, then, may be (only) applied if no (unacceptable) malicious or erroneous behavior is detected when checking the behavior of the software on the virtual model.

So, checking the behavior, e.g., comprises checking if the behavior is indicative of a malicious attack, and updating the hardware, e.g., comprises updating the hardware if the behavior is not indicative of a malicious attack.

Otherwise, if the behavior of the virtual model is indicative of a malicious attack, the update may be rejected. In this way, it may be avoided at the malicious attack reaches the hardware read may lead to undesired behavior.

In some embodiments, the mobile device comprises a vehicle and the hardware comprises hardware of an electronic control unit, ECU, of the vehicle.

In such embodiments, the ECU may be part of an autonomous driving and/or assisted driving system.

Accordingly, the simulation may comprise a simulation of a traffic environment.

Optionally, the simulation of the traffic environment is indicative of synthetic measurement data of the simulated traffic environment.

Further embodiments provide a computer program comprising instructions which, when the computer program is executed by a computer, cause the computer to carry out the proposed method.

Other embodiments provide a computer-readable data carrier having stored thereon the proposed computer program.

Further embodiments provide an apparatus comprising one or more interfaces for communication and a data processing circuit configured to execute the proposed method.

The skilled person will appreciate that the proposed approach is particularly valuable for OTA updates. So, the proposed approach is not only applicable to a stationary but also mobile devices. A mobile device, e.g., comprises a vehicle.

Accordingly, embodiments of the present disclosure may provide a vehicle comprising the proposed apparatus. For this, the proposed approach, e.g., may be implemented in an ECU of the vehicle.

The skilled person will also appreciate that the proposed approach may be applied also in various other applications, e.g., mobile phones and/or wearables.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 schematically illustrates a use case of the proposed approach;
Fig. 2 shows a block diagram schematically illustrating an infotainment and autonomous driving system of a vehicle;
Fig. 3 shows a flow chart schematically illustrating an embodiment of a method for updating software of a mobile device;
Fig. 4 shows a block diagram schematically illustrating an embodiment of an apparatus according to the proposed approach; and
Fig. 5 shows a block diagram schematically illustrating an embodiment of an ECU for the proposed approach.

The proposed approach particularly deals with the evaluation of the authenticity of OTA updates without harming the actual system. Basically, this method is « NON INVASIVE « as laid out in more detail below.

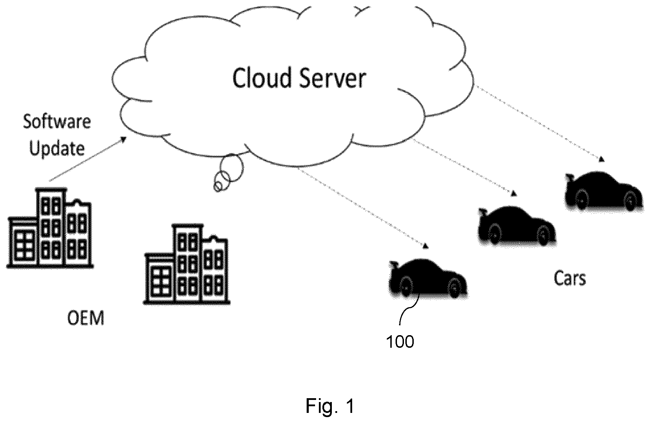

Fig. 1 schematically illustrates a use case of the proposed approach. This exemplary use case relates to an OTA update scenario where a vehicle manager, e.g., a vehicle manufacturer ("OEM") updates one or multiple vehicles 100 via a cloud server. For this, and update file is transmitted from the vehicle manager to the vehicles 100 over the cloud server. As the skilled person will understand, potential attackers may use the OTA update for cyber attacks. For this, malicious content or erroneous content may be added to the update file. In some scenarios, the potential attackers may intercept and relay such manipulated update file to the vehicles 100.

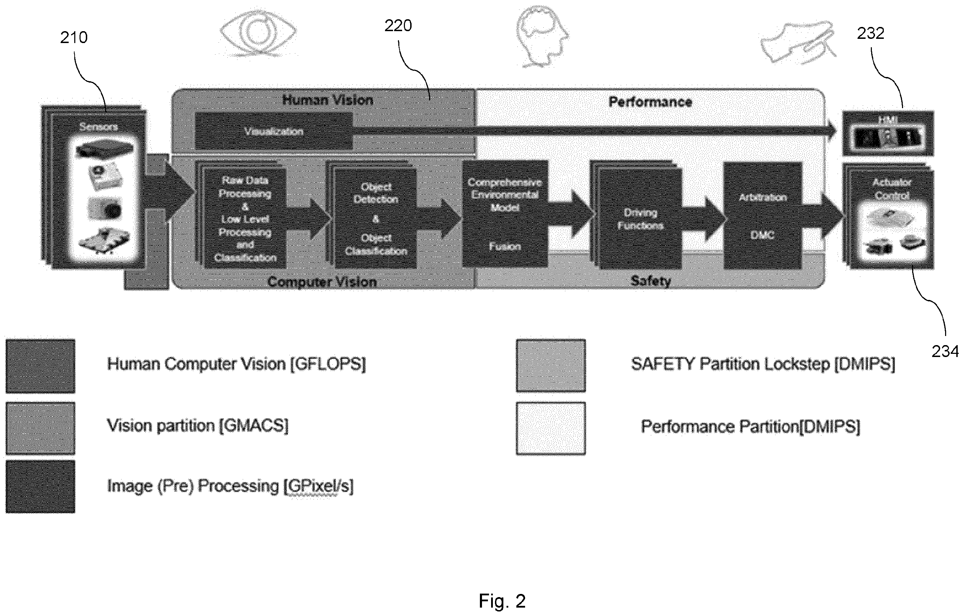

Such attacks may have an undesired impact on the vehicles 100. Once the vehicles 100 are updated using the manipulated update file, e.g., an infotainment system of the vehicles 100 may become inoperable or may behave unusual. For assisted or autonomous driving systems, manipulated updates may even lead to undesired driving behavior, as laid out in more detail below with reference to Fig. 2.

Fig. 2 shows a block diagram schematically illustrating an infotainment and autonomous driving system.

As illustrated, the system includes one or more ECUs 220 including an autonomous driving control unit (ADCU) as well as an infotainment unit.

The ECUs 220 may include the following components:
- SoC (system-on-a-chip) (from Vendors like TI / NXP / Ambarella / Infenion / NVIDIA and so on)
- SOC Contains multiple Cores - like performance cores, real time cores etc.
- Controllers with Dual lock step redundancy support
- DSPs (digital signal processors)
- Accelerators
- HSM (hardware security module)
- Serialiser / Deserialiser modules
- Memory: RAM (random access memory), Flash memory, LPDDR (low-power double data rate) memory, eMMC (embedded multimedia card).
- Power Control Unit
- Other sensor specific ASICs (application specific integrated circuits) like ELMOS for Ultrasonic sensor
- Communication interfaces like CAN (controller area network), CANFD (CAN flexible data rate), Ethernet & switches, CSI-2 (camera serial interface 2), other drivers.

The autonomous driving control unit is connected to one or more sensors 210 of the vehicle to perceive the environment of the vehicle based on sensor data of the environment. The autonomous driving control unit processes the sensor data to obtain control signals and provides them for controlling 234 actuators of the vehicle for steering, accelerating, and/or decelerating the vehicle. So, while sensors around the vehicle do the sensing/perception, the ADCU is the heart that computes, processes and understands the environment and makes sense out of the situation (situation interpretation) and it sends ACT signal to the other actuators like Brake / Steering ECU. Therefore, the ADCU are critical ECUs for autonomous mobility.

The infotainment unit is coupled to a human machine interface (HMI) configured for interaction with passengers of the vehicle.

The ECUs 220 may run a suitable software for the autonomous driving control unit and the infotainment unit. In some applications, it may be desired to update the software, sometimes on a regular basis, e.g., to eliminate bugs and/or vulnerabilities, and/or to implement or disable certain functions. In doing so, malicious or errorless content in the update file may lead to errors and/or malfunctions. An exemplary scenarios such errors or malfunctions can lead to undesired driving maneuvers and/or unusual behavior of the HMI.

It is therefore an aim of the present disclosure to provide a more secure concept for updating software of mobile devices.

One idea of the proposed embodiments is to not subject the updated patch to actual hardware but to « VIRTUAL MODELS of an ECU running on actual ECU«. This way, even by any means if attacker is able to inject MALWARE into the safety critical system, the virtual model can validate the software update by simulating operation scenarios using new updated software on, e.g., a « VIRTUAL ECU«. In doing so, a LOGIC module may assess critical modules being affected by the planned update in the ECU and critical information being queried and transmitted.

By the proposed approach, the important aspects of the CIA triad (Confidentiality / Integrity and Authenticity) can be ensured, without harming / compromising the actual HW (hardware) & system. Only when VIRTUAL MODEL of the ECU & its LOGIC unit confirms that it is valid SW (software) patch update, then the actual update to the ECU / Controller will be flashed or updated.

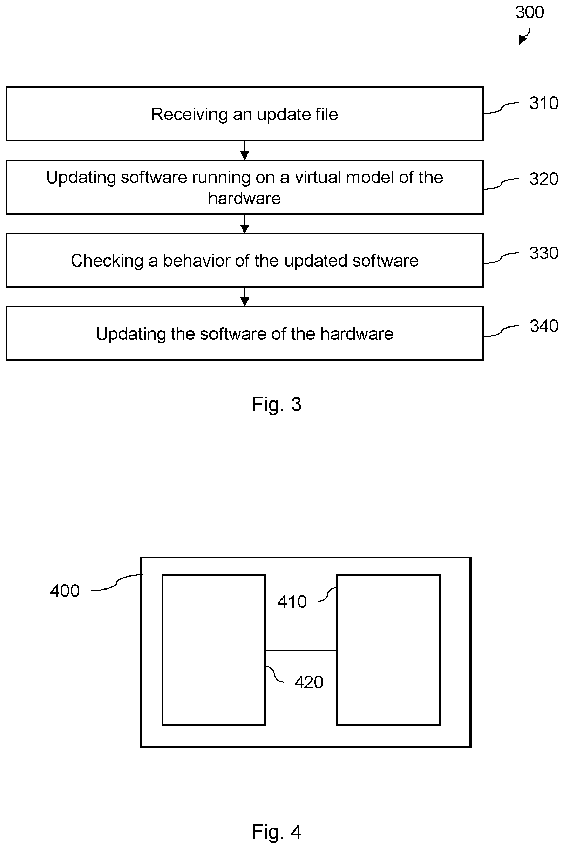

Embodiments of the present disclosure are now described in more detail below with reference to Fig. 3.

Fig. 3 shows a flow chart schematically illustrating a method 300 for updating software of a mobile device. The method 300 may be executed by the mobile device and comprises receiving 310 an update file. For this, the mobile device may be communicatively coupled to an update server providing the update file. In practice, the update file may be communicated between the update server and the mobile device through various communication channels. In some embodiments, the update file may be received by the mobile device via a mobile or cellular communications network and/or via a wireless local area network (WLAN). The update file may contain a patch configured for changing the software of the mobile device.

Further, the method 300 comprises updating 320, based on the update file, a software running on a virtual model of hardware of the mobile device. In doing so, the update file is applied for updating the software on the virtual model of the hardware.

The virtual model of the hardware (e.g., relating to an electronic chip) is a software equivalent of the physical behavior of that hardware. It includes information such as electrical characteristics, signal propagation, and other important properties of the hardware. Engineers use virtual models to simulate and test the performance of electronic circuits and systems before building physical prototypes. This helps save time and money while ensuring that the final product works as expected.

In some applications, the virtual model may be configured to simulate SoCs from standard components such as buses, clocks, memory, register, interconnects, interrupts to sophisticated accelerators. These virtual models can be used for early software development, concept development, defining architectures, cloud based simulations, and so on. One may usually develop these virtual models to run on host PCs. Also, one could develop these virtual models to run on targets like ARM. In other words, a virtual model is a behavioral twin of a hardware simulated on a host/target computer. It behaves exactly as that of actual hardware.

For applications in autonomous driving control units, the virtual model, e.g., virtually behaves like a processing circuit configured for processing sensor data for autonomous driving. Such simulation, e.g., provides for receiving by the virtual model (synthetic/virtual or real) sensor data, processing sensor data, and obtaining driving instructions for actuators of the vehicle (see Fig. 2).

Further, method 300 comprises checking 330 a behavior of the updated software on the virtual model. For this, the outcome of the virtual model may be checked on anomalies, e.g., if the outcome would make the vehicle behave unusual. In practice, e.g., it is checked if the behavior of the vehicle may lead to dangerous traffic situations or if the human machine interface would not work as it is supposed to, e.g., if it provides the right output for a certain input, in response to the software update on the virtual model.

As well, method 300 comprises updating 340, based on the update file, software of the hardware of the mobile device based on the behavior of the updated software on the virtual model. In doing so, the software, e.g., is only updated based on the update file if the virtual model does not show any unacceptable behavior. In practice, e.g., unusual behavior of safety-critical functions (e.g., driving functions, passive safety functions, and/or the like) may be considered unacceptable while unusual behavior of non-safety-critical may be considered acceptable.

Optionally, the software update may be also rejected if non-safety-critical functions are negatively affected. i.e., if they do not work as intended.

In doing so, malicious attacks may be identified and updates indicative of malicious attacks may be rejected.

So, applied to an automotive application, the idea, e.g., is to use "a virtual model of the SoC/ ECU" in the ADCU that runs on a separate core or on one of the existing core. This may be referred to as "SECURE VIRTUAL MODEL (SVM)".

In a further exemplary embodiment, e.g., the following steps are carried out for a software update of the vehicle:
- Whenever ECU/ADCU receives SW patch for OTA update or even via other communication channels like ethernet /CAN and/or the like, the SW patch is received by the SECURE VIRTUAL MODEL first.
- The SW Patch is run on the "Virtual model" along with one or more pre-defined test cases simulating real-world processes of the simulated hardware. It can also happen that the "SECURE VIRTUAL MODEL" keeps running the patch while vehicle is in its natural course and trace/watch the modules being touched by the SW update and raise a flag whenever the SW patch, e.g., tries to access critical modules of an ECU like Safety modules, Unnecessary Actuation control commands, accessing security keys, or SW is trying to reverse-engineering or distribute contacts/navigation information / map updates or in-vehicle networks which it is not supposed to. Whenever this module identifies anomalies like this, it raises flag that the SW PATCH is not safe and is discarded.
- Only after a predefined number of runs of test cases or of predefined mileage, and when there is no harm with the updated SW, then the SW running on SVM is actually flashed / updated onto the HW ECU.

According to another aspect of the present disclosure, the virtual model, e.g., the SVM does not need to represent the whole hardware which may be affected by the update but only (predefined) critical and/or safety-critical components. So, the SVM may not need to replicate the full blown ECU. Many unimportant modules can be represented as stubs so that actual processing need not happen for all modules. Only the critical modules can have virtual modules and less critical modules or components may be filled with stubs to just pass on non-critical predefined output. This way the computation can be fast and accurate. So, less computation resources may be required.

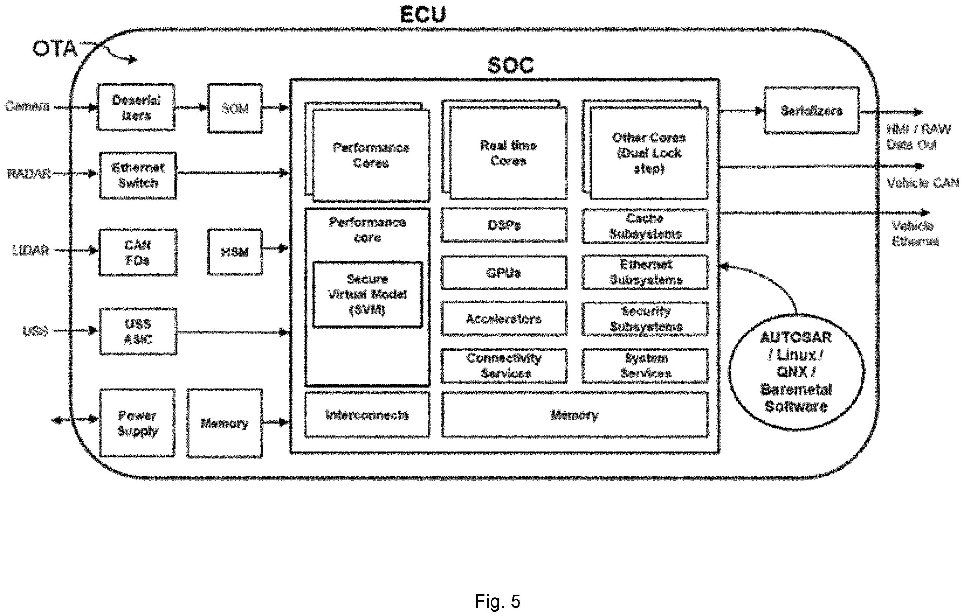

The skilled person will appreciate that, in applications, the proposed approach may be implemented as a computer-implemented method, as a computer program, and/or in an apparatus, as laid out in more detail below with reference to Figs. 4 and 5.

Fig. 4 shows a block diagram schematically illustrating an embodiment of such an apparatus 400. The apparatus comprises one or more interfaces 410 for communication and a data processing circuit 420 configured to execute the proposed method.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programable gate arrays, one or more central, and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

As illustrated in Fig. 5, the proposed approach, e.g., is applied for an ECU of a vehicle. The ECU is configured to receive the update file over the air (OTA) and to interact with the human machine interface (HMI), the vehicle CAN, and/or a vehicle ethernet.

The ECU is configured for processing data from, e.g., different sensors, here, a camera system, a radar system, a lidar system, and/or an ultrasonic sensor (USS) system. To this end, the ECU is equipped with deserializers, an ethernet switch, CAN FDs, and a USS ASIC. For further processing, the ECU comprises a system-on-a-chip (SOC) including multiple processing (performance, real time, and other) cores.

For spatial isolation of the (secure) virtual model (SVM), one or more of the cores may be reserved for the virtual model. That is, the virtual model is only around on the one or more reserved cores. In some embodiments, further resources, e.g., memory resources, maybe also reserved for the virtual model.

In this way, malicious content or errors introduced by over the air updates may not be propagated to other computing resources.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (300) for updating software of a mobile device, the method (300) comprising the following steps by the mobile device:
receiving an update file;
updating, based on the update file, a software running on a virtual model of hardware of the mobile device;
checking a behavior of the updated software; and
updating, based on the update file, software of the hardware of the mobile device based on the behavior of the updated software on the virtual model.

2. The method (300) of claim 1, wherein checking the behavior of the updated software comprises:
applying a simulation to the updated software on the virtual model; and
checking the behavior of the updated software on the virtual model for the simulation.

3. The method (300) of claim 2, wherein the simulation comprises a simulation of an environment of the mobile device.

4. The method (300) of any one of the preceding claims, wherein checking the behavior comprises checking if the behavior is indicative of a malicious attack, and wherein updating software of the hardware comprises updating the software of the hardware if the behavior of the software on the virtual model is not indicative of a malicious attack.

5. The method (300) of any one of the preceding claims, wherein the mobile device comprises a vehicle and the hardware comprises hardware of an electronic control unit, ECU, of the vehicle.

6. The method (300) of claim 5, wherein the ECU is part of an autonomous driving and/or assisted driving system.

7. The method (300) of claim 2 or 3, wherein the simulation comprises a simulation of a traffic environment.

8. The method (300) of claim 7, wherein the simulation of the traffic environment is indicative of synthetic measurement data of the simulated traffic environment.

9. A computer program comprising instructions which, when the computer program is executed by a computer, cause the computer to carry out the method (300) of any one of the claims 1 to 8.

10. A computer-readable data carrier having stored thereon the computer program of claim 9.

11. An apparatus (400) comprising:
one or more interfaces (410) for communication; and
a data processing circuit (420) configured to execute the method (300) of any one of the claims 1 to 8.

12. A vehicle comprising an apparatus (400) according to claim 11.
